(19) Europäisches Patentamt
European Patent Office
Office européen des brevets

(11) Veröffentlichungsnummer: **0 029 558**
**B1**

(12) # EUROPÄISCHE PATENTSCHRIFT

(45) Veröffentlichungstag der Patentschrift: **31.08.83**

(51) Int. Cl.³: **C 09 B 29/33**, C 08 K 5/23, D 06 P 1/18

(21) Anmeldenummer: **80107077.2**

(22) Anmeldetag: **15.11.80**

(54) **Azoverbindungen, Verfahren zu ihrer Herstellung und ihre Verwendung.**

(30) Priorität: **24.11.79 DE 2947441**

(43) Veröffentlichungstag der Anmeldung: **03.06.81 Patentblatt 81/22**

(45) Bekanntmachung des Hinweises auf die Patenterteilung: **31.08.83 Patentblatt 83/35**

(84) Benannte Vertragsstaaten: **BE CH DE FR GB IT LI NL**

(56) Entgegenhaltungen:
**DE-A-1 808 015**
**DE-A-1 808 017**
**FR-A-1 333 570**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Hunger, Klaus, Dr., Johann-Strauss-Strasse 35, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 029 558 B1

# Azoverbindungen, Verfahren zu ihrer Herstellung und ihre Verwendung

Aus den DE-OS Nrn. 1808017 und 1808015 waren wasserunlösliche Monoazofarbstoffe bekannt, und zwar aus diazotierten ein- bis mehrfach substituierten Anilinen bzw. gegebenenfalls weitere Substituenten tragendem o-Methoxycarbonylanilin und N-alkylsubstituierten bzw. unsubstituierten 5-Acetoacetylaminobenzimidazolonen als Kupplungskomponenten.

Insbesondere sind in Beispiel 6 der DE-OS Nr. 1808015 bzw. in Beispiel 17 der DE-OS Nr. 1808017 Monoazofarbstoffe beschrieben, die aus diazotiertem 2-Methoxycarbonyl-5-nitroanilin bzw. 2-Methoxycarbonyl-4-nitroanilin und 5-Acetoacetylaminobenzimidazolon bzw. seinem 1-methylsubstituierten Derivat als Kupplungskomponenten erhalten wurden. Diese Pigmente weisen unbefriedigende bis schlechte Überlakierechtheiten und Lichtechtheiten auf.

Gegenstand der Erfindung sind Azoverbindungen der Formel I

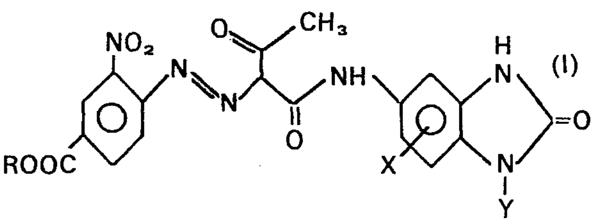

(I)

in der R einen Alkylrest mit 1 bis 4 C-Atomen, X ein Wasserstoff-, Chlor- oder Bromatom, eine Methyl-, Äthyl-, Methoxy- oder Äthoxygruppe, und Y Wasserstoff, eine Methyl- oder Äthylgruppe bedeutet.

Die Erfindung betrifft weiterhin ein Verfahren zur Herstellung der genannten Azoverbindungen, das dadurch gekennzeichnet ist, dass man Verbindungen der Formel II

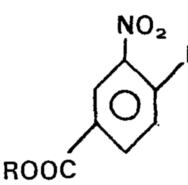

(II)

in der R die obengenannte Bedeutung aufweist, diazotiert und die erhaltene Diazoniumverbindung mit einer Verbindung der Formel III

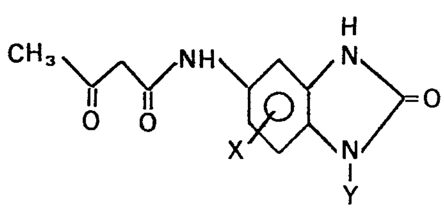

(III)

in der X und Y die in Formel I genannte Bedeutung aufweisen, kuppelt. Die Erfindung betrifft weiterhin die Verwendung der erfindungsgemässen Azoverbindungen als Farbmittel, insbesondere als Pigmente.

Als Amine der Formel I können beispielsweise eingesetzt werden:
3-Nitro-4-aminobenzoesäuremethylester,
3-Nitro-4-aminobenzoesäureäthylester,
3-Nitro-4-aminobenzoesäure-n-propylester,
3-Nitro-4-aminobenzoesäureisopropylester,
3-Nitro-4-aminobenzoesäure-n-butylester,
3-Nitro-4-aminobenzoesäureisobutylester, und
3-Nitro-4-aminobenzoesäure-1-methylpropylester.

Die Diazotierung des Amins der Formel II kann beispielsweise mit Alkalinitriten oder niederen Alkylnitriten mit ausreichend starken Säuren, insbesondere einer Mineralsäure, aber auch mit Nitrosylschwefelsäure erfolgen. Hier und im folgenden umfasst der Begriff nieder im Zusammenhang mit Alkylresten Gruppen mit 1 bis 6, insbesondere 1 bis 4 C-Atomen. Es kann hierbei als auch bei der anschliessenden Kupplung von Nutzen sein, einen Zusatz von oberflächenaktiven Mitteln zu verwenden, wie z.B. nichtionogenen, anionaktiven oder kationaktiven Dispergiermitteln.

Als Kupplungskomponenten werden beispielsweise verwendet:

5-Acetoacetylaminobenzimidazolon-(2),
5-Acetoacetylamino-6-chlorbenzimidazolon-(2),
5-Acetoacetylamino-7-chlorbenzimidazolon-(2),
5-Acetoacetylamino-6-brombenzimidazolon-(2),
5-Acetoacetylamino-7-brombenzimidazolon-(2),
5-Acetoacetylamino-6-methylbenzimidazolon-(2),
5-Acetoacetylamino-7-methylbenzimidazolon-(2),
5-Acetoacetylamino-6-methoxybenzimidazolon-(2),
5-Acetoacetylamino-7-methoxybenzimidazolon-(2),
5-Acetoacetylamino-6-äthoxybenzimidazolon-(2),
5-Acetoacetylamino-7-äthoxybenzimidazolon-(2),
5-Acetoacetylamino-1-methylbenzimidazolon-(2),
5-Acetoacetylamino-1-äthylbenzimidazolon-(2), und
5-Acetoacetylamino-1-methyl-6-chlorbenzimidazolon-(2).

Diazotierung und Kupplung können auch in Gegenwart geeigneter organischer Lösemittel durchgeführt werden, wie z.B. Eisessig, niedere Alkanole, Dioxan, Formamid, Dimethylformamid, Dimethylformamid, Dimethylsulfoxid, Pyridin oder N-Methylpyrrolidon.

Zur Erzielung der vollen Farbstärke und einer besonders günstigen Kristallstruktur ist es oft zweckmässig, das Kupplungsgemisch einige Zeit zu erhitzen, beispielsweise zu kochen oder unter Druck

bei Temperaturen über 100°C zu halten, gegebenenfalls in Gegenwart von organischen Lösemitteln, wie niederen Alkanolen, beispielsweise Äthanol, Halogenaromaten wie Chlorbenzol oder Dichlorbenzolen, z.B. o-Dichlorbenzol, Dimethylformamid oder in Gegenwart von Harzseife. Besonders reine und farbstarke Pigmente erhält man mit den erfindungsgemässen Produkten, wenn man nach der Kupplung die feuchten Presskuchen oder die getrockneten Pulver einer thermischen Nachbehandlung mit organischen Lösemitteln, wie Alkoholen, vor allem niederen Alkanolen, Pyridin, Eisessig, Dimethylformamid, N-Methylpyrrolidon, Dimethylsulfoxid, Halogenaromaten wie Chlorbenzol oder Dichlorbenzolen, z.B. o-Dichlorbenzol oder Nitrobenzol unterwirft oder eine Mahlung der Pigmente unter Zusatz von Mahlhilfsmitteln anschliesst.

Die Herstellung der Pigmente kann auch in Gegenwart eines Trägermaterials, beispielsweise von Schwerspat, erfolgen.

Die neuen Verbindungen sind wasserunlöslich und unlöslich in den üblichen organischen Lösemitteln und eignen sich zur Pigmentierung von Druckfarben, Farblacken und Dispersionsanstrichfarben, zum Färben von Kautschuk, Kunststoffen und natürlichen oder synthetischen Harzen. Insbesondere sind sie für Lacke und Kunststoffe geeignet, an die besonders hohe Echtheitsanforderungen gestellt werden. Sie sind ferner geeignet für den Pigmentdruck auf Substraten, insbesondere Textilfasermaterialien oder anderen flächenförmigen Gebilden, wie beispielsweise Papier. Die Pigmente können auch für andere Anwendungsgebiete, z.B. in fein verteilter Form zum Anfärben von Kunstseide aus Viskose oder Celluloseäthern bzw. -estern, Polyamiden, Polyurethanen, Polyglykolterephthalaten oder Polyacrylnitrilen in der Spinnmasse oder zum Färben von Papier verwendet werden.

Die Pigmente lassen sich in den genannten Medien gut verarbeiten. Die Färbungen weisen sehr gute Licht- und Wetterechtheiten auf und sind gegen den Einfluss von Chemikalien, vor allem Lösemitteln, beständig. Ausserdem zeichnen sich die erfindungsgemässen Pigmente durch einwandfreie Überlackierechtheit in Lacken und Ausblutechtheit in Kunststoffen aus.

In den folgenden Beispielen beziehen sich die Prozentangaben auf das Gewicht.

*Beispiel 1:*

10,5 g 3-Nitro-4-aminobenzoesäureäthylester werden in 80 ml Eisessig suspendiert und mit 15 ml 31%iger Salzsäure 1 h lang verrührt. Man kühlt auf 8-10°C und tropft 10 ml einer 5N-Natriumnitritlösung zu und rührt 30 min nach.

12 g 5-Acetoacetylaminobenzimidazolon-(2) werden in 150 ml Wasser und 9 ml 33%iger Natronlauge gelöst und nach Zugabe von 5 g Kieselgur geklärt. Man gibt zur geklärten Lösung 1 g eines Kondensationsproduktes aus Stearylalkohol mit 25 Äquivalenten Äthylenoxid und fällt die Kupplungskomponente durch Einstürzen einer Lösung von 6 ml Eisessig in 50 ml Wasser aus. Dann werden noch 25 ml einer 4N-Natriumacetatlösung zugegeben.

Bei 25°C tropft die vorstehend bereitete Diazoniumsalzlösung innerhalb 1 h zur Suspension der Kupplungskomponente. Man erhitzt nach dem Auskuppeln noch 30 min auf 95°C, saugt das Produkt ab, wäscht es mit Wasser salzfrei und trocknet es bei 60-70°C. Das trockene Rohpigment wird in 250 ml Eisessig auf 115°C erhitzt und 15 min bei dieser Temperatur gehalten. Dann filtriert man das orangefarbene Pigment ab, wäscht mit Methanol und Wasser und trocknet. Ausbeute 20,2 g des Pigmentes der Formel

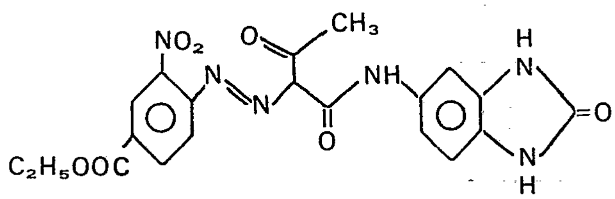

*Beispiel 2:*

19,6 g in 200 ml Eisessig gelöster 3-Nitro-4-aminobenzoesäuremethylester werden innerhalb von 45 min mit 31,8 g 40%iger Nitrosylschwefelsäure versetzt. 23,3 g 5-Acetoacetylaminobenzimidazolon-(2) werden in 200 ml Wasser und 18 ml 33%iger Natronlauge gelöst. Diese Lösung und die Diazoniumsalzlösung werden gleichzeitig auf eine vorgelegte Lösung von 200 ml Wasser, 12 ml Eisessig und 20 ml einer 10%igen Lösung des Kondensationsproduktes von Stearylalkohol mit 25 Äquivalenten Äthylenoxid und 25 ml einer 4 N-Natriumacetatlösung getropft. Die Kupplung ist nach 45 min beendet. Man erhitzt das Gemisch auf 95°C, hält es 30 min bei dieser Temperatur und kühlt dann auf 70°C ab. Man saugt das Produkt ab, wäscht salzfrei, verrührt den wasserfeuchten Presskuchen mit 600 ml 50%igem Isobutanol und erhitzt 1 h auf 120°C. Nach dem Abdestillieren des Isobutanols durch Wasserdampf wird filtriert und getrocknet. Ausbeute 42,3 g eines rotstichig-gelben Pigmentes der Formel

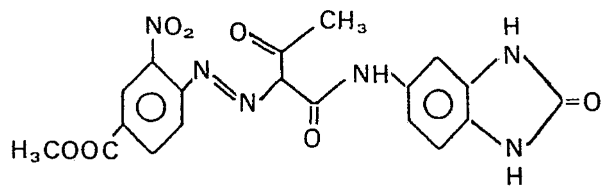

*Beispiel 3:*

10,5 g 3-Nitro-4-aminobenzoesäureäthylester werden in 160 ml Eisessig und 30 ml 30%iger Salzsäure 1 h verrührt. Man kühlt auf 10°C ab und gibt dann 10 ml einer 5N-Natriumnitritlösung unter die Oberfläche zu. Die fertige Diazoniumsalzlösung wird 30 min nachgerührt und nach Zusatz von etwas Kieselgur geklärt.

14 g 5-Acetoacetylamino-7-chlorbenzimidazolon-(2) werden in 150 ml Wasser und 10 ml 33%iger Natronlauge gelöst. Die beiden so bereiteten Lösungen werden bei 10° C gleichzeitig zu einer aus den folgenden Komponenten bereiteten Lösung getropft: 200 ml Eiswasser, 6 ml Eisessig, 10 ml einer 10%igen Lösung des Additionsproduktes von Stearylalkohol mit 25 Äquivalenten Äthylenoxid und 25 ml einer 4N-Natriumacetatlösung. Die Zutropfzeit beträgt 1 h. Nach dem Auskuppeln wird noch 1 h bei Raumtemperatur nachgerührt, das Produkt abgesaugt, mit Wasser salzfrei gewaschen und getrocknet. Das Rohpigment wird in 250 ml Chlorbenzol auf 120° C erhitzt und 15 min bei dieser Temperatur gehalten. Dann wird abgesaugt, mit Chlorbenzol, Methanol und Wasser gewaschen und getrocknet. Ausbeute 21 g eines rotstichig-gelben Pigmentes der Formel

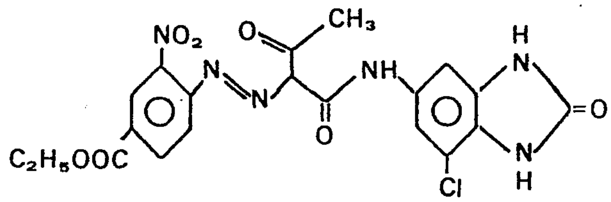

In der nachstehenden Tabelle sind weitere Beispiele von Azoverbindungen beschrieben, die durch Kuppeln der diazotierten aromatischen Amine (Diazokomponente) der Formel II mit den Kupplungskomponenten der Formel III erhalten werden:

| Bspiel Nr. | Formel II R | Formel III X | Formel III Y | Farbton |
|---|---|---|---|---|
| 4 | $CH_3$ | 6-Cl | H | gelbstichig-orange |
| 5 | $CH_3$ | 7-Cl | H | gelbstichig-orange |
| 6 | $CH_3$ | 6-Br | H | gelb |
| 7 | $CH_3$ | 7-Br | H | rotstichig-gelb |
| 8 | $CH_3$ | 6-$CH_3$ | H | braun |
| 9 | $CH_3$ | 7-$CH_3$ | H | rotstichig-gelb |
| 10 | $CH_3$ | 6-$OCH_3$ | H | gelbstichig-braun |
| 11 | $CH_3$ | 7-$OCH_3$ | H | orange |
| 12 | $CH_3$ | 6-$OC_2H_5$ | H | gelbstichig-braun |
| 13 | $CH_3$ | 7-$OC_2H_5$ | H | orange |
| 14 | $CH_3$ | H | $CH_3$ | gelbstichig-braun |
| 15 | $C_2H_5$ | 6-Cl | H | rotstichig-gelb |
| 16 | $C_2H_5$ | 6-Br | H | orange |
| 17 | $C_2H_5$ | 7-Br | H | gelbstichig-braun |
| 18 | $C_2H_5$ | 6-$CH_3$ | H | braun |
| 19 | $C_2H_5$ | 7-$CH_3$ | H | orange |
| 20 | $C_2H_5$ | 6-$OCH_3$ | H | braun |
| 21 | $C_2H_5$ | 7-$OCH_3$ | H | orange |
| 22 | $C_2H_5$ | 6-$OC_2H_5$ | H | braun |
| 23 | $C_2H_5$ | H | $CH_3$ | orange |
| 24 | $C_2H_5$ | 6-Cl | $CH_3$ | braun |
| 25 | n-$C_3H_7$ | H | H | rotstichig-gelb |
| 26 | iso-$C_3H_7$ | H | H | gelb |
| 27 | n-$C_4H_9$ | H | H | rotstichig-gelb |
| 28 | iso-$C_4H_9$ | H | H | rotstichig-gelb |
| 29 | $-CH(CH_3)-CH_2-CH_3$ | H | H | gelb |
| 30 | n-$C_3H_7$ | 7-Cl | H | rotstichig-gelb |
| 31 | n-$C_4H_9$ | 7-Cl | H | rotstichig-gelb |

## Patentansprüche

1. Azoverbindungen der Formel (I)

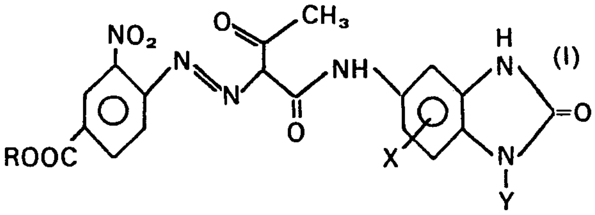

(I)

in der R einen Alkylrest mit 1 bis 4 C-Atomen, X ein Wasserstoff-, Chlor- oder Bromatom, eine Methyl-, Äthyl-, Methoxy- oder Äthoxygruppe, und Y ein Wasserstoffatom, eine Methyl- oder Äthylgruppe bedeutet.

2. Verfahren zur Herstellung der Azoverbindungen nach Anspruch 1, dadurch gekennzeichnet, dass man Verbindungen der Formel (II)

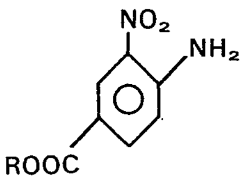

(II)

in der R die in Anspruch 1 genannte Bedeutung hat, diazotiert und die erhaltene Diazoniumverbindung mit einer Verbindung der Formel (III)

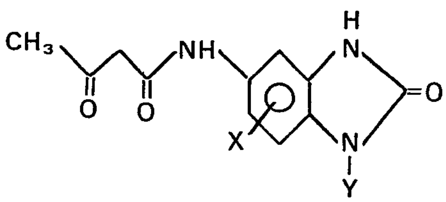

(III)

in der X und Y die in Anspruch 1 genannten Bedeutungen aufweisen, kuppelt.

3. Verwendung der Verbindungen gemäss Anspruch 1 als Farbmittel.

4. Verwendung der Verbindungen gemäss Anspruch 1 als Pigmente.

5. Verwendung der Verbindungen gemäss Anspruch 1 zum Färben bzw. Bedrucken von Kunststoffen, natürlichen und synthetischen Harzen, Kautschuk, Papier, Viskoseseide, Celluloseestern bzw. -äthern, Polyolefinen, Polyurethanen, Polyacrylnitril oder Polyglykolterephthalaten sowie zur Herstellung von Druckfarben, Lackfarben oder Dispersionsanstrichfarben.

## Claims

1. Azo compounds of the formula (I)

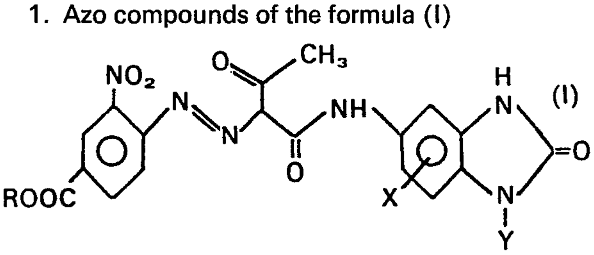

(I)

in which R is an alkyl radical with 1 to 4 C-atoms, X is an hydrogen atom, chlorine atom or bromine atom, a methyl, ethyl, methoxy or ethoxy group, and Y is a hydrogen atom, a methyl or ethyl group.

2. Process for the preparation of the azo compounds of claim 1, characterized by that the compounds of the formula (II)

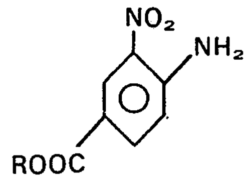

(II)

in which R has the meaning mentioned in claim 1, are diazotized, and the diazonium compound obtained is coupled with a compound of the formula (III)

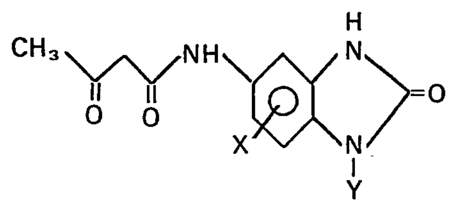

(III)

in which X and Y have the meanings mentioned in claim 1.

3. Use of the compounds of claim 1 as colorants.

4. Use of the compounds of claim 1 as pigments.

5. Use of the compounds of claim 1 for coloring or printing synthetics, natural and synthetic resins, caoutchouc, paper, viscose rayon, cellulose esters or cellulose ethers, polyolefines, polyurethanes, polyacrylonitrile or polyglycol terephthalates as well as for the preparation of printing inks, lacquers or dispersion paints.

## Revendications

1. Composés azoïques répondant à la formule (I)

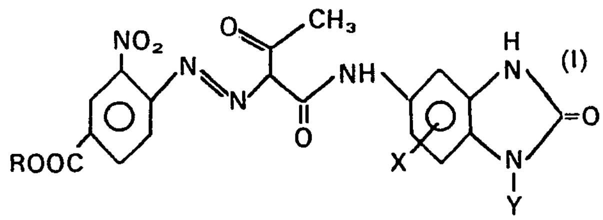

(I)

dans laquelle R représente un radical alkyle contenant de 1 à 4 atomes de carbone, X représente un atome d'hydrogène, de chlore ou de brome ou un radical méthyle, éthyle, méthoxy ou éthoxy, et Y représente un atome d'hydrogène ou un radical méthyle ou éthyle.

2. Procédé de préparation des composés azoïques selon la revendication 1, procédé caractérisé en ce qu'on diazote de tels composés répondant à la formule (II)

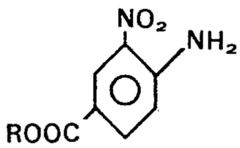

(II)

dans laquelle R a la signification donnée à la revendication 1, et on copule le composé de diazonium obtenu avec un composé répondant à la formule (III)

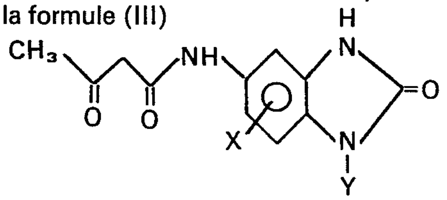

(III)

dans laquelle X et Y ont les significations données à la revendication 1.

3. Application des composés selon la revendication 1 comme colorants.

4. Application des composés selon la revendication 1 comme pigments.

5. Application des composés selon la revendication 1 à la teinture ou à l'impression de matières plastiques, de résines naturelles ou synthétiques, du caoutchouc, du papier, de la rayonne de viscose, d'esters ou d'éthers de la cellulose, de polyoléfines, de polyuréthannes, du polyacrylonitrile ou de poly(téréphtalates de glycols), ainsi qu'à la préparation d'encres d'imprimerie, de nuanceurs ou de peintures-dispersions.